# EUROPEAN PATENT APPLICATION

(11) **EP 4 664 660 A1**
(43) Date of publication of application: **17.12.2025**
(21) Application number: 24868587.7
(22) Date of filing: 11.09.2024
(51) Int. Cl.: H01M 50/531, H01M 50/536

(54) **SECONDARY BATTERY**

(30) Priority: 22.09.2023 KR 20230127307
(71) Applicant: LG Energy Solution, Ltd., Seoul 07335 (KR)
(72) Inventor: OH, Yun Pyo, Daejeon 34122 (KR); AN, In Gu, Daejeon 34122 (KR); KIM, Hye Jin, Daejeon 34122 (KR); KIM, Min Hyun, Daejeon 34122 (KR); SUNG, Jin Su, Daejeon 34122 (KR)
(74) Representative: Goddar, Heinz J.
(86) International application number: PCT/KR2024/013832
(87) International publication number: WO 2025/063609

(57) **Abstract**

The present disclosure relates to a secondary battery, and a secondary battery according to one aspect of the present disclosure may include an electrode; an electrode tab including an extension portion extending outward from the electrode and a tab coupling portion provided on one side of the extension portion in the extension direction; an electrode lead coupled to the tab coupling portion and capable of electrically connecting the electrode to the outside; and an auxiliary connecting member coupled to the electrode lead and the extension portion, respectively.

## Description

### TECHNICAL FIELD

### CROSS-REFERENCE TO RELATED APPLICATIONS

The present application claims priority to Korean Patent Application No. 10-2023-0127307 filed on September 22, 2023 in the Republic of Korea, the disclosures of which are incorporated herein by reference.

### TECHNICAL FIELD

The present disclosure relates to a secondary battery, and more specifically, to a secondary battery capable of being stably connected to an external power source or load.

### BACKGROUND ART

Recently, the demand for small, lightweight, and relatively high-capacity secondary batteries is rapidly increasing with the rapid spread of electronic devices that use batteries, such as mobile phones, laptop computers, and electric vehicles. In particular, lithium secondary batteries are in the spotlight as a power source for portable devices because they are lightweight and have high energy density. Accordingly, research and development efforts for improving the performance of lithium secondary batteries are actively being conducted.

In general, a secondary battery is composed of a plurality of electrodes stacked on each other, a separator interposed between each of the plurality of electrodes, an electrode lead for connecting the electrode to an external power source or load, and an electrode tab extending from the electrode and coupled to the electrode lead. In this case, the electrode may be a positive electrode including a positive electrode active material or a negative electrode including a negative electrode active material.

In such a secondary battery, the electrode tab performs the function of electrically connecting the electrode and the electrode lead to each other. However, in conventional secondary batteries, if a certain defect or damage occurs in the electrode tab, there is a problem that the electrodes connected to the electrode tab are unable to participate in the charging and discharging process.

As an example, in the process of manufacturing a secondary battery, an electrode tab may be welded to an electrode lead to be connected to the electrode lead, and a portion of the electrode tab may be torn by this welding process. Such damage to the electrode tab may cause a short circuit in the electrode tab, thereby interfering with the charging and discharging of the battery.

Accordingly, there has been an urgent need for the development of a secondary battery capable of stably connecting the electrode to an external power source or load even if a certain defect or damage occurs in a portion of the electrode tab of the secondary battery.

### SUMMARY

### TECHNICAL PROBLEM

The present disclosure is designed to solve the problems of the related art, and therefore the present disclosure is directed to providing a secondary battery in which an electrode can be stably connected to an external power source or load.

Technical problems of the present disclosure are not limited to the above-described problems, and other problems not mentioned herein may be clearly understood by those having ordinary skill in the art from the following description of the present disclosure.

### TECHNICAL SOLUTION

A secondary battery according to one aspect of the present disclosure may include an electrode; an electrode tab including an extension portion extending outward from the electrode and a tab coupling portion provided on one side of the extension portion in the extension direction; an electrode lead coupled to the tab coupling portion and capable of electrically connecting the electrode to the outside; and an auxiliary connecting member coupled to the electrode lead and the extension portion, respectively.

In this case, the auxiliary connecting member may be made of a conductive material so that the current flowing through the extension portion may bypass the tab coupling portion and flow to the electrode lead.

In this case, the secondary battery may further include a coupling member that couples at least one of the electrode tab and the electrode lead to the auxiliary connecting member.

In this case, the auxiliary connecting member and the coupling member may be integrally formed.

In this case, the secondary battery may further include a coupling layer provided between the auxiliary connecting member and the electrode tab, or between the auxiliary connecting member and the electrode lead.

In this case, the auxiliary connecting member may have a wire shape.

In this case, the auxiliary connecting member may include a tab-side coupling portion coupled to the extension portion; a lead-side coupling portion coupled to the electrode lead; and a connection portion connecting the tab-side coupling portion and the lead-side coupling portion, wherein at least a portion thereof may be elastically stretchable.

In this case, the auxiliary connecting member may include a tab-side coupling portion coupled to the extension portion; a lead-side coupling portion coupled to the electrode lead; and a connection portion formed of a plate-shaped sheet or film extending between the tab-side coupling portion and the lead-side coupling portion to connect the tab-side coupling portion and the lead-side coupling portion.

In this case, at least one of the tab-side coupling portion and the lead-side coupling portion may have a shape in which at least a portion thereof is bent with respect to the extension portion.

In this case, the auxiliary connecting member may include a tab-side coupling portion coupled to the extension portion; a lead-side coupling portion coupled to the electrode lead; and a connection portion connecting the tab-side coupling portion and the lead-side coupling portion, wherein in the extension portion, the length from the electrode lead to the tab-side coupling portion may be shorter than the length from the tab-side coupling portion to the electrode lead.

In this case, the electrodes may be provided in plurality and be stacked with a separator therebetween, the electrode tabs may be provided in plurality corresponding to the plurality of electrodes, and the auxiliary connecting member may be coupled to the electrode tab located at the outermost side among the plurality of electrode tabs.

In this case, the auxiliary connecting member may include a first auxiliary connecting member and a second auxiliary connecting member, wherein the first auxiliary connecting member may be coupled to the electrode tab located at the outermost side of one side of the plurality of electrode tabs, and the second auxiliary connecting member may be coupled to the electrode tab located at the outermost side of the other side of the plurality of electrode tabs.

### ADVANTAGEOUS EFFECTS

The secondary battery according to one aspect of the present disclosure is configured such that an auxiliary connecting member coupled to an electrode tab extending from an electrode and an electrode lead, respectively, assists the electrode tab to connect the electrode and the electrode lead, so that the electrode may be stably connected to an external power source or load.

In the secondary battery according to one aspect of the present disclosure, the auxiliary connecting member is made of a conductive material, so that the current flowing through the electrode tab may bypass the part where the electrode tab and the electrode lead are coupled, thereby maintaining an electrical connection between the electrode and the external power source or load even if defects or damage occur in a part of the electrode tab.

The effects to be obtained by the present disclosure are not limited to the above-described effects, and other effects not mentioned herein may be clearly understood by those having ordinary skill in the art from the following description and the accompanying drawings of the present disclosure.

### BRIEF DESCRIPTION OF THE DRAWINGS

FIG. 1 is a perspective view of a secondary battery according to the first embodiment of the present disclosure.
FIG. 2 is a vertical cross-sectional view of a secondary battery according to the first embodiment of the present disclosure.
FIG. 3 is a vertical cross-sectional view of a secondary battery according to the second embodiment of the present disclosure.
FIG. 4 is a vertical cross-sectional view of a secondary battery according to the third embodiment of the present disclosure.
FIG. 5 is a vertical cross-sectional view of a secondary battery according to the fourth embodiment of the present disclosure.
FIG. 6 is a vertical cross-sectional view of a secondary battery according to the fifth embodiment of the present disclosure.
FIG. 7 is a vertical cross-sectional view of a secondary battery according to the sixth embodiment of the present disclosure.

### DETAILED DESCRIPTION

Hereinafter, preferred embodiments of the present disclosure will be described in sufficient detail with reference to the accompanying drawings to enable those having ordinary skill in the technical field pertaining to the present disclosure to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the gist of the present disclosure is omitted, and in affixing the reference numerals to the elements in each drawing, the identical or similar reference numerals are affixed to the identical or similar elements throughout the present disclosure.

Additionally, it should be understood that the terms or words used in the present disclosure and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation.

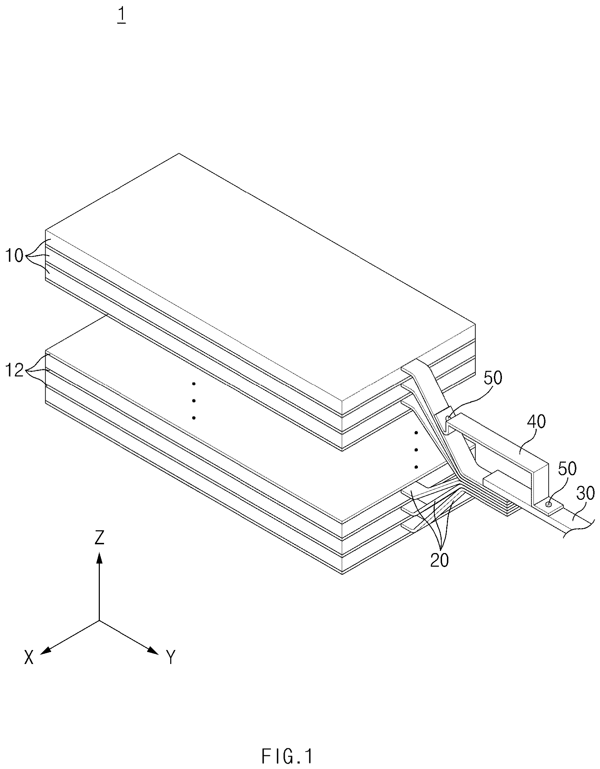

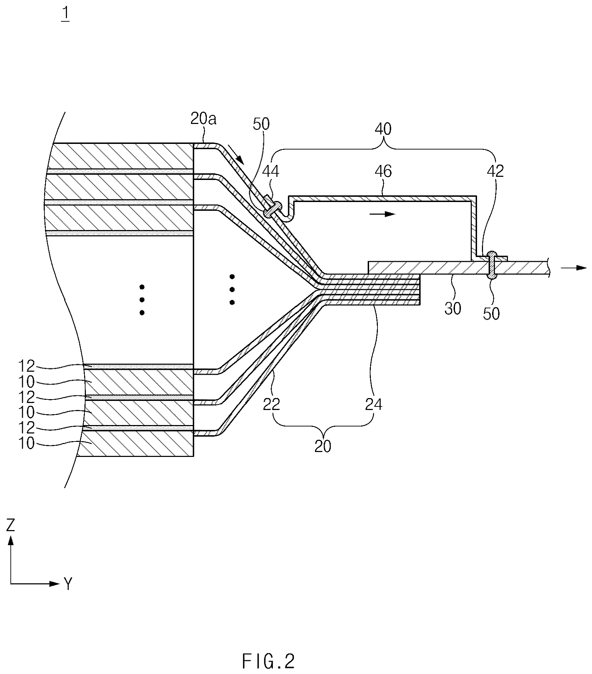

FIG. 1 is a perspective view of a secondary battery according to the first embodiment of the present disclosure. FIG. 2 is a vertical cross-sectional view of a secondary battery according to the first embodiment of the present disclosure. At this time, each component of a secondary battery according to an embodiment of the present disclosure is schematically illustrated in the drawings, and the size of components, the thickness of lines, and the like may be somewhat exaggerated for convenience of understanding.

In FIG. 1, a secondary battery 1 according to the first embodiment of the present disclosure is disclosed. The secondary battery 1 according to the first embodiment of the present disclosure is a device capable of storing electric energy or releasing the stored electric energy to the outside. To this end, the secondary battery 1 according to this embodiment may be electrically connected to an external power source or load.

For example, the secondary battery 1 according to this embodiment may be charged by being connected to an external power source. Alternatively, the secondary battery 1 according to this embodiment may be connected to an external load to release electric energy to the external load.

Hereinafter, components of the secondary battery according to the first embodiment of the present disclosure will be described in detail. Referring to FIGS. 1 and 2, the secondary battery 1 according to the first embodiment of the present disclosure includes an electrode 10 and an electrode tab 20. The electrode 10 may be a rectangular plate, sheet, or film in which an electrode active material is applied to a metal thin film. However, the shape of the electrode 10 may be appropriately modified if necessary.

In this case, the metal plate may be a thin plate made of aluminum (Al) or copper (Cu), and the electrode active material may be lithium-cobalt oxide (LCO), lithium-manganese oxide (LMO), nickel-cobalt-manganese (NCM), nickel-cobalt-aluminum (NCA), lithium-iron phosphate (LFP), graphite (C), silicon (Si), or the like, but is not limited thereto.

And, in this embodiment, the electrode 10 may be configured in plurality and may be stacked in the vertical direction. At this time, each separator 12 may be interposed between the electrodes 10 stacked on each other.

The separator 12 may perform the function of ensuring the stability of the secondary battery 1 by preventing the electrodes 10 stacked on each other from contacting each other. Such a separator 12 may be made of polyethylene, polypropylene, or the like, but is not limited thereto.

Meanwhile, although a positive electrode and a negative electrode are not separately illustrated in the drawings of this specification, some of the plurality of stacked electrodes 10 may be negative electrodes and the others may be positive electrodes. And, in the assembly in which the plurality of electrodes 10 are stacked, the positive electrode and the negative electrode may be alternately stacked. The material of the metal thin plate and the type of the electrode active material described above may be appropriately selected according to the polarity of the electrode 10.

Referring to FIGS. 1 and 2 again, an electrode tab 20 may be connected to the edge side of the electrode 10 according to the first embodiment of the present disclosure. At this time, the electrode tab 20 may be provided in plurality.

And, the plurality of electrode tabs 20 may be connected to the plurality of electrodes 10, respectively. These electrode tabs 20 may be made of the same material as the metal thin plate of the electrode 10, but are not limited thereto.

In this embodiment, the electrode tab 20 may include an extension portion 22 and a tab coupling portion 24. The extension portion 22 may extend from the edge of the electrode 10 to the outside of the electrode 10. At this time, the extension portions 22 of the plurality of electrode tabs 20 may be collected at a point where ends thereof in the extension direction are spaced apart from the electrode 10 by a predetermined distance.

The tab coupling portion 24 of the secondary battery 1 according to the first embodiment of the present disclosure may be provided at an end of the extension portion 22 in the extension direction. In this embodiment, the tab coupling portion 24 may be a portion where a plurality of electrode tabs 20 are electrically coupled to each other and also coupled to the electrode lead 30 described later.

To this end, the tab coupling portion 24 of the plurality of electrode tabs 20 may be stacked in the vertical direction and be in close contact with each other. And, the tab coupling portion 24 of the plurality of electrode tabs 20 may be electrically coupled to each other.

For example, the plurality of tab coupling portions 24 may be coupled through a welding process. Alternatively, the plurality of tab coupling portions 24 may be coupled by means of a coupling member such as a screw, pin, or rivet, or an adhesive. A method in which the plurality of tab coupling portions 24 are coupled to each other is not particularly limited as long as they may be electrically connected.

Meanwhile, the assembly of the plurality of electrodes 10 and the plurality of electrode tabs 20 described above has a structure (stack type) in which the plurality of electrodes 10 are stacked in the vertical direction, but the assembly may be formed in various forms such as a winding type, a stack/folding type, and the like depending on the embodiment of the secondary battery.

And, since the positive electrode and the negative electrode are not illustrated separately in the drawings of this specification, the electrode tabs are not illustrated separately as positive electrode tabs and negative electrode tabs. If the positive electrode and the negative electrode are alternately stacked, the positive electrode tabs connected to the positive electrodes may be stacked on each other, and the negative electrode tabs connected to the negative electrodes may be stacked on each other.

Referring to FIGS. 1 and 2 again, the secondary battery 1 according to the first embodiment of the present disclosure includes an electrode lead 30. In this embodiment, the electrode lead 30 is configured to electrically connect the electrode 10 and an external power source or an external load to each other. That is, the electrode lead 30 may be configured to function as an electrode interface.

In this embodiment, the electrode lead 30 may have a plate or bar shape made of a conductive material. One side of the electrode lead 30 may be electrically coupled to a plurality of tab coupling portions 24 coupled to each other.

For example, the electrode lead 30 and the plurality of tab coupling portions 24 may be coupled through a welding process. Alternatively, they may be coupled by means of a coupling member such as a screw, pin, or rivet, or an adhesive. A method in which the electrode lead 30 and the plurality of tab coupling portions 24 are coupled to each other is not particularly limited as long as they may be electrically connected.

At this time, in this embodiment, the electrode lead 30 may be coupled to the tab coupling portion 24 of the electrode tab 20 located at the outermost side in the stacking direction (i.e., the vertical direction) among the plurality of electrode tabs 20. More specifically, as shown in FIG. 2, the electrode lead 30 may be coupled to the tab coupling portion 24 of the electrode tab 20a located at the uppermost side among the plurality of electrode tabs 20. Of course, the electrode lead 30 may also be coupled to the tab coupling portion 24 of the electrode tab 20 located at the lowermost side among the electrode tabs 20.

On the other hand, the electrode tab 20 may be damaged during or after the electrode tab 20 and the electrode lead 30 are coupled. For example, a portion of the electrode tab 20 may be torn, thereby causing a short circuit. This is because, as the electrode tab 20 and the electrode lead 30 are coupled, a predetermined force (tension) may be applied to the electrode tab 20.

This damage may occur in a portion of the extension portion 22 of the electrode tab 20 that is adjacent to the tab coupling portion 24. This is because such a portion is most closely affected by the coupling process between the electrode tab 20 and the electrode lead 30.

Alternatively, this damage may occur in the electrode tab 20 located at the outermost side in the stacking direction among the plurality of electrode tabs 20. Referring to the drawings, the damage may occur in the electrode tab 20 located at the uppermost or lowermost side among the plurality of electrode tabs 20 shown in FIG. 2. This is because the electrode tab 20 located at the outermost side is highly likely to receive a strong force (tension) due to the coupling with the electrode lead 30.

As described above, damage to the electrode tab 20 may cause a problem that the secondary battery 1 cannot function normally. For example, if the damage occurs, the electrode 10 connected to the electrode tab 20 may not participate in the charging or discharging process.

To solve this problem, the secondary battery 1 according to the first embodiment of the present disclosure may include an auxiliary connecting member 40. In this embodiment, the auxiliary connecting member 40 is configured to connect the electrode 10 and the electrode lead 30 by assisting the electrode tab 20.

Referring to FIGS. 1 and 2, the auxiliary connecting member 40 of the secondary battery 1 according to the first embodiment of the present disclosure includes a lead-side coupling portion 42, a tab-side coupling portion 44, and a connection portion 46. The lead-side coupling portion 42 is a configuration of the auxiliary connecting member 40 that is coupled to the electrode lead 30. In this embodiment, the lead-side coupling portion 42 may be provided in the form of a plate, sheet, or film.

And, the lead-side coupling portion 42 may be coupled to the electrode lead 30 by a coupling member 50. At this time, the coupling member 50 may include a coupling screw, a coupling pin, a rivet, or the like.

This coupling member 50 may be made of a conductive material. As a result, the lead-side coupling portion 42 and the electrode lead 30 may be electrically connected via the coupling member 50. The effects of this will be described later.

At this time, the lead-side coupling portion 42 may have a bent shape so that at least a portion thereof may face or contact one surface of the electrode lead 30. As a result, the lead-side coupling portion 42 and the electrode lead 30 may be more stably coupled.

The tab-side coupling portion 44 is a configuration of the auxiliary connecting member 40 that is coupled to the extension portion 22 of the electrode tab 20. In this embodiment, the tab-side coupling portion 44 may be provided in the form of a plate, sheet, or film. And, the tab-side coupling portion 44 may be coupled to the extension portion 22 of the electrode tab 20 by the above-described coupling member 50.

At this time, in this embodiment, the tab-side coupling portion 44 may be connected to the extension portion 22 of the electrode tab 20 located at the outermost side in the stacking direction among the plurality of electrode tabs 20. More specifically, as shown in FIG. 2, the tab-side coupling portion 44 may be coupled to the extension portion 22 of the electrode tab 20a located at the uppermost side. Of course, the tab-side coupling portion 44 may also be coupled to the electrode tab 20 located at the lowermost side.

Accordingly, the auxiliary connecting member 40 may effectively assist in the connection of the electrode 10 and the electrode lead 30. This is because the above-described damage is highly likely to occur at the electrode tab 20 located at the outermost side. Of course, the tab-side coupling portion 44 may be configured to be connected to two or more electrode tabs 20 among the plurality of electrode tabs 20.

At this time, the tap-side coupling portion 44 may have a bent shape so that at least a portion thereof may face or contact one surface of the extension portion 22. Accordingly, the tap-side coupling portion 44 and the electrode tap 20 may be more stably coupled.

And, in this embodiment, when viewed in the extension direction of the extension portion 22, the length from the electrode 10 to the tab-side coupling portion 44 may be shorter than the length from the tab-side coupling portion 44 to the electrode lead 30. In other words, when viewed in the extension direction of the extension portion 22, the tab-side coupling portion 44 may be positioned closer to the electrode 10 than the electrode lead 30.

This is because the part where the connection is assisted by the auxiliary connecting member 40 is the section between the tab-side coupling portion 44 and the electrode lead 30 in the extension portion 22, and thus the closer the tab-side coupling portion 44 is to the electrode 10, the wider the part where the connection is assisted by the auxiliary connecting member 40. Through this, the auxiliary connecting member 40 of the secondary battery 1 according to this embodiment may more effectively assist the connection between the electrode 10 and the electrode lead 30.

Next, a connection portion 46 may be provided between the tab-side coupling portion 44 and the lead-side coupling portion 42. The connection portion 46 may connect the tab-side coupling portion 44 and the lead-side coupling portion 42 to each other. In this embodiment, the connection portion 46 may be formed of a plate-shaped member, a sheet, a film, or the like extending from the lead-side coupling portion 42 to the tab-side coupling portion 44.

As such, the auxiliary connecting member 40 according to this embodiment may be coupled to the extension portion 22 of the electrode tab 20 and the electrode lead 30, respectively, so that the load (such as tension) applied to the electrode tab 20 may be alleviated. Accordingly, the connection between the electrode 10 and the electrode lead 30 may be assisted.

In this case, the auxiliary connecting member 40 of the secondary battery 1 according to the first embodiment of the present disclosure may be made of a material having electrical conductivity. Therefore, the current flowing through the extension portion 22 of the electrode tab 20 may bypass the tab coupling portion 24 and flow to the electrode lead 30, as indicated by the arrow shown in FIG. 2.

Accordingly, even if there is an electrical conductivity defect in the extension portion 22 of the electrode tab 20 in the section between the tab-side coupling portion 44 and the electrode lead 30, the electrode 10 and the external load or power source may be electrically connected through the auxiliary connecting member 40 and the electrode lead 30. For example, the defect may be a short circuit caused by a portion of the extension portion 22 being torn.

Meanwhile, in the embodiment shown, the lead-side coupling portion 42, the tab-side coupling portion 44, and the connection portion 46 of the auxiliary connecting member 40 are illustrated to be integrally formed. At this time, being integrally formed means that they are not physically and spatially separated. However, the lead-side coupling portion 42, the tab-side coupling portion 44, and the connection portion 46 may each be provided as separate members and then coupled.

As described above, in the secondary battery 1 according to the first embodiment of the present disclosure, the auxiliary connecting member 40 may be coupled to the electrode tab 20 and the electrode lead 30, respectively, to assist in the connection between the electrode 10 and an external load or power source. In this case, the connection may be an electrical connection. Alternatively, the connection may be a physical or structural connection.

Furthermore, the auxiliary connecting member 40 of the secondary battery 1 according to the first embodiment of the present disclosure may cover the part where the electrode tab 20 and the electrode lead 30 are coupled to protect them from external impact or contamination.

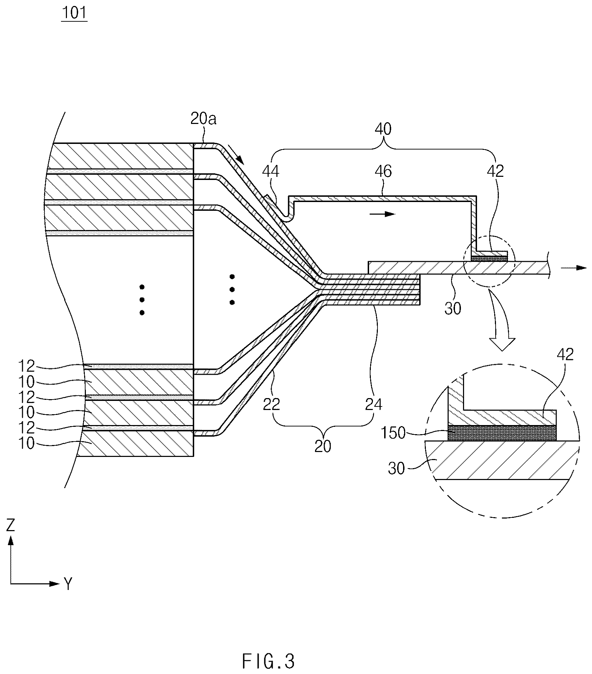

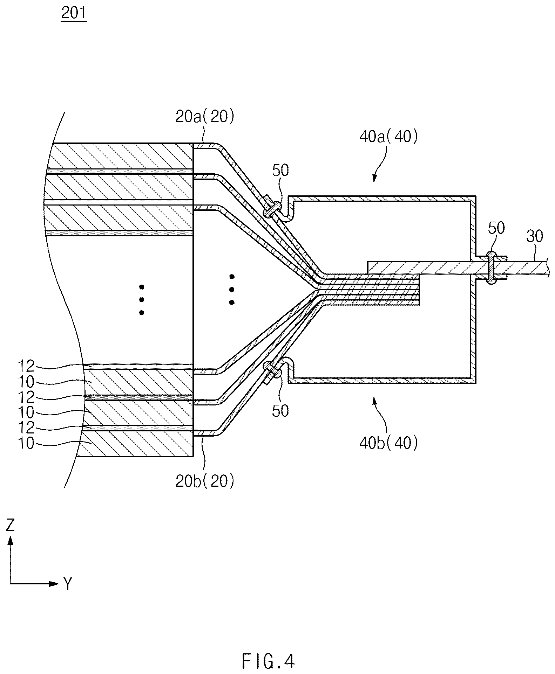

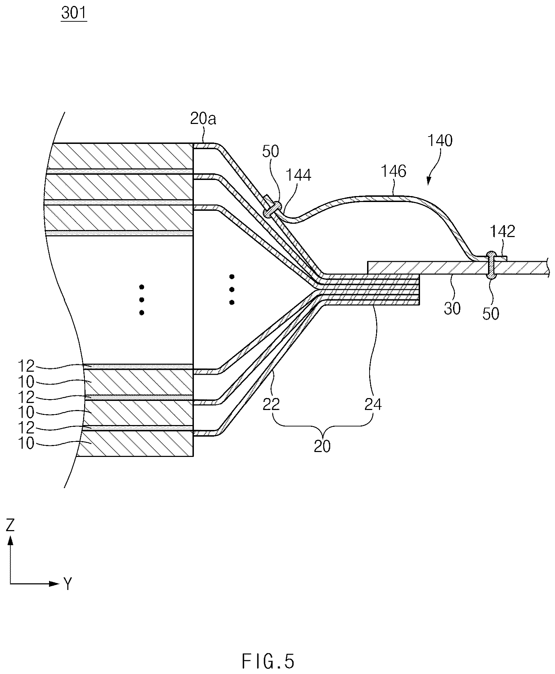

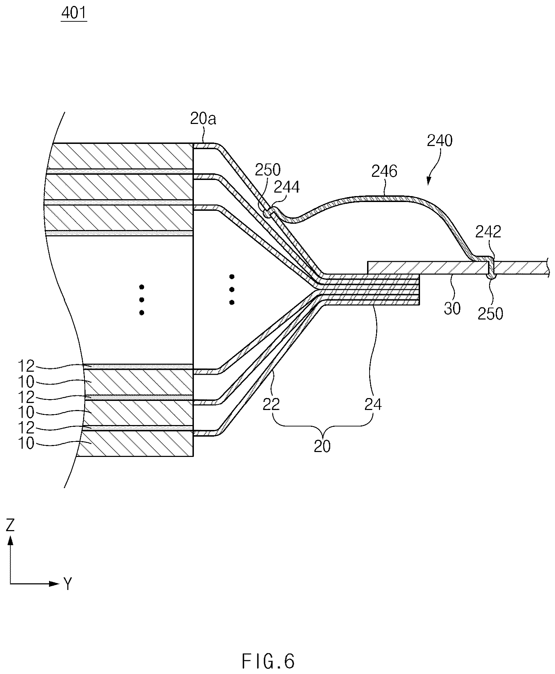

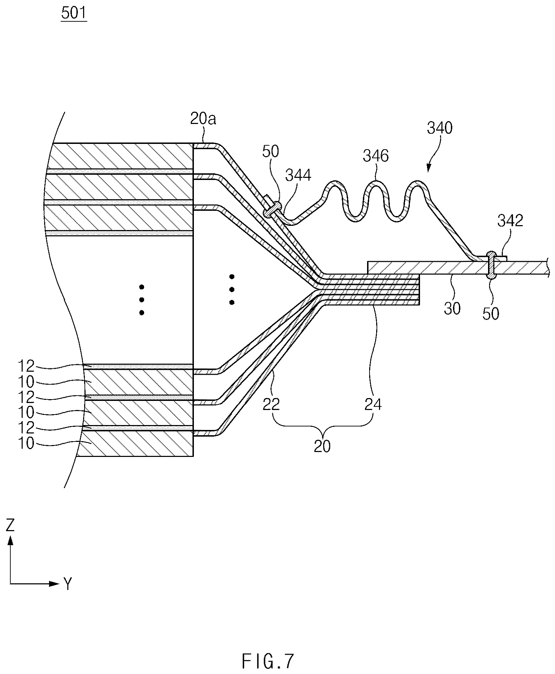

Hereinafter, secondary batteries according to other embodiments of the present disclosure will be described with different drawings. FIG. 3 is a vertical cross-sectional view of a secondary battery according to the second embodiment of the present disclosure. FIG. 4 is a vertical cross-sectional view of a secondary battery according to the third embodiment of the present disclosure. FIG. 5 is a vertical cross-sectional view of a secondary battery according to the fourth embodiment of the present disclosure. FIG. 6 is a vertical cross-sectional view of a secondary battery according to the fifth embodiment of the present disclosure. FIG. 7 is a vertical cross-sectional view of a secondary battery according to the sixth embodiment of the present disclosure. In this case, the same reference numerals as in the drawings shown above refer to the same members performing the same functions.

FIG. 3 discloses a secondary battery 101 according to the second embodiment of the present disclosure. Referring to FIG. 3, the secondary battery 101 according to this embodiment may further include a coupling layer 150 provided between the lead-side coupling portion 42 of the auxiliary connecting member 40 and the electrode lead 30. Accordingly, the lead-side coupling portion 42 and the electrode lead 30 may be coupled to each other.

In this embodiment, the coupling layer 150 may be formed of an adhesive for attaching the auxiliary connecting member 40 to the electrode lead 30. In this case, the coupling layer 150 may include an electrically conductive material. Through this, the coupling layer 150 may electrically connect the auxiliary connecting member 40 and the electrode lead 30.

Alternatively, the coupling layer 150 may be formed by a welding process. That is, in this embodiment, the coupling layer 150 may be made of a material for welding separately provided, or a material formed by melting a portion of the electrode tab 20 or the electrode lead 30. In this case, the coupling layer 150 may also electrically connect the auxiliary connecting member 40 and the electrode lead 30.

Although not shown in detail, the above-described coupling layer may also be provided between the tab-side coupling portion 44 and the extension portion 22 of the electrode tab 20a. Of course, any one of the tab-side coupling portion 44 and the lead-side coupling portion 42 may be coupled by the coupling layer 150 described above, and the other may be coupled by the coupling member 50 (shown in FIG. 2) described in the first embodiment.

As such, according to the coupling layer 150 of the secondary battery 101 according to this embodiment, the auxiliary connecting member 40 may be coupled to the electrode tab 20 and the electrode lead 30 in a simple process. And, since the coupling structure between the auxiliary connecting member 40 and the electrode tab 20 and the electrode lead 30 may be simplified, the secondary battery 101 may be configured to be more compact.

FIG. 4 discloses a secondary battery 201 according to the third embodiment of the present disclosure. Referring to FIG. 4, the auxiliary connecting member 40 according to this embodiment may include a first auxiliary connecting member 40a and a second auxiliary connecting member 40b.

In this embodiment, the first auxiliary connecting member 40a may couple an electrode tab 20a located at one outermost side (i.e., the uppermost side) of the plurality of electrode tabs 20 when viewed in the stacking direction of the electrode 10 to the electrode lead 30.

And, the second auxiliary connecting member 40b may couple an electrode tab 20b located at the other outermost side (i.e., the lowermost side) of the plurality of electrode tabs 20 when viewed in the stacking direction of the electrode 10 to the electrode lead 30.

Accordingly, the connection between the electrode tabs 20a, 20b located at the outermost side, which are prone to defects or damages among the plurality of electrode tabs 20, and the electrode lead 30 may be assisted by the auxiliary connecting member 40, respectively.

FIG. 5 discloses a secondary battery 301 according to the fourth embodiment of the present disclosure. The auxiliary connecting member 40 of the secondary battery 301 according to this embodiment may have at least a portion of a wire shape.

More specifically, in this embodiment, the connection portion 46 of the auxiliary connecting member 40 may be formed of a metal wire connecting the tab-side coupling portion 144 and the lead-side coupling portion 142. Therefore, the connection portion 46 may have a predetermined flexibility.

As a result, the connection between the electrode 10 and the electrode lead 30 by the auxiliary connecting member 40 may be made more smoothly. Additionally, the coupling tolerance between the auxiliary connecting member 40, the electrode tab 20, and the electrode lead 30 may be eliminated.

In this embodiment, the tab-side coupling member 144 may have a shape of a plate, a sheet, or a film in contact with the extension portion 22 of the electrode tab 20. And, the lead-side coupling member 142 may have a shape of a plate, a sheet, or a film in contact with the electrode lead 30.

As a result, the area where the auxiliary connecting member 40 contacts the electrode tab 20 and the electrode lead 30 is sufficiently secured, so that a space for the coupling member 50 to be coupled may be sufficiently provided. Accordingly, the coupling structure may be configured more stably. Of course, as in the embodiment shown in FIG. 3, a coupling layer may be provided in place of the coupling member 50.

FIG. 6 discloses a secondary battery 401 according to the fifth embodiment of the present disclosure. Referring to FIG. 6, the auxiliary connecting member 240 of the secondary battery 401 according to this embodiment may be provided integrally with the coupling member 250. In this case, being provided integrally may mean that they are not physically and spatially separated.

In this embodiment, a coupling member 250 having a rivet shape may be connected to the lead-side coupling portion 242 of the auxiliary connecting member 240. And, a coupling member 250 having a rivet shape may be connected to the tab-side coupling portion 244.

Accordingly, the auxiliary connecting member 240 may be coupled to the electrode tab 20 and the electrode lead 30 in a simpler process. And, since the connecting structure between the auxiliary connecting member 240 and the electrode tab 20 and the electrode lead 30 may be simplified, the secondary battery 401 may be configured to be more compact.

FIG. 7 discloses a secondary battery 501 according to the sixth embodiment of the present disclosure. Referring to FIG. 7, the auxiliary connecting member 340 of the secondary battery 501 according to the sixth embodiment of the present disclosure may be configured such that at least a portion thereof may be elastically stretchable.

In this embodiment, the connection portion 346 of the auxiliary connecting member 340 may have a structure that can be elastically stretchable. For example, the connection portion 346 may have a coil spring shape. Alternatively, the connection portion 346 may be formed of a metal wire that is bent in a meandering manner or in a zigzag shape.

As a result, the connection between the electrode 10 and the electrode lead 30 by the auxiliary connecting member 340 may be made more smoothly. Additionally, the coupling tolerance between the auxiliary connecting member 340, the electrode tab 20, and the electrode lead 30 may be somewhat alleviated.

The present disclosure has been hereinabove described with regard to a limited number of embodiments and drawings, but the present disclosure is not limited thereto and may be embodied in different forms by those having ordinary skill in the technical field pertaining to the present disclosure within the technical aspect of the present disclosure and the scope of the appended claims and their equivalents.

[List of Reference Numerals]
1, 101, 201, 301, 401, 501: Secondary battery
10: Electrode
20: Electrode tab
30: Electrode lead
40, 140, 240, 340: Auxiliary connecting member
50, 250: Coupling member
150: Coupling layer

## Claims

1. A secondary battery, comprising:
an electrode;
an electrode tab comprising an extension portion extending outward from the electrode and a tab coupling portion provided on one side of the extension portion in the extension direction;
an electrode lead coupled to the tab coupling portion and capable of electrically connecting the electrode to the outside; and
an auxiliary connecting member coupled to the electrode lead and the extension portion, respectively.

2. The secondary battery according to claim 1,
wherein the auxiliary connecting member is made of a conductive material so that the current flowing through the extension portion may bypass the tab coupling portion and flow to the electrode lead.

3. The secondary battery according to claim 1, further comprising:
a coupling member that couples at least one of the electrode tab and the electrode lead to the auxiliary connecting member.

4. The secondary battery according to claim 3,
wherein the auxiliary connecting member and the coupling member are integrally formed.

5. The secondary battery according to claim 1, further comprising:
a coupling layer provided between the auxiliary connecting member and the electrode tab, or between the auxiliary connecting member and the electrode lead.

6. The secondary battery according to claim 1,
wherein the auxiliary connecting member has a wire shape.

7. The secondary battery according to claim 1,
wherein the auxiliary connecting member comprises:
a tab-side coupling portion coupled to the extension portion;
a lead-side coupling portion coupled to the electrode lead; and
a connection portion connecting the tab-side coupling portion and the lead-side coupling portion, wherein at least a portion thereof may be elastically stretchable.

8. The secondary battery according to claim 1,
wherein the auxiliary connecting member comprises:
a tab-side coupling portion coupled to the extension portion;
a lead-side coupling portion coupled to the electrode lead; and
a connection portion formed of a plate-shaped sheet or film extending between the tab-side coupling portion and the lead-side coupling portion to connect the tab-side coupling portion and the lead-side coupling portion.

9. The secondary battery according to claim 8,
wherein at least one of the tab-side coupling portion and the lead-side coupling portion has a shape in which at least a portion thereof is bent with respect to the extension portion.

10. The secondary battery according to claim 1,
wherein the auxiliary connecting member comprises:
a tab-side coupling portion coupled to the extension portion;
a lead-side coupling portion coupled to the electrode lead; and
a connection portion connecting the tab-side coupling portion and the lead-side coupling portion,
wherein in the extension portion, the length from the electrode to the tab-side coupling portion is shorter than the length from the tab-side coupling portion to the electrode lead.

11. The secondary battery according to claim 1,
wherein the electrodes are provided in plurality and are stacked with a separator therebetween,
the electrode tabs are provided in plurality corresponding to the plurality of electrodes, and
the auxiliary connecting member is coupled to the electrode tab located at the outermost side among the plurality of electrode tabs.

12. The secondary battery according to claim 11,
wherein the auxiliary connecting member comprises a first auxiliary connecting member and a second auxiliary connecting member,
wherein the first auxiliary connecting member is coupled to the electrode tab located at the outermost side of one side of the plurality of electrode tabs, and
the second auxiliary connecting member is coupled to the electrode tab located at the outermost side of the other side of the plurality of electrode tabs.
